# EUROPÄISCHE PATENTANMELDUNG

(11) **EP 2 196 759 A1**
(43) Veröffentlichungstag der Anmeldung: **16.06.2010**
(21) Anmeldenummer: 09172384.1
(22) Anmeldetag: 07.10.2009
(51) Int. Cl.: F28F 9/02, F01N 13/00, F02M 25/07, F28D 7/00, F16L 51/00, F16L 41/08

(54) **Anordnung zur fluidischen Verbindung eines Innengehäuses mit einem nach außen führenden Rohrstutzen**

(30) Priorität: 12.12.2008 DE 102008061673
(71) Anmelder: Pierburg GmbH, 41460 Neuss (DE)
(72) Erfinder: Dellen, Franz, 47877, Willich (DE)
(74) Vertreter: Patentanwälte ter Smitten

(57) **Zusammenfassung**

Anordnungen zur fluidischen Verbindung eines Innengehäuses mit einem nach außen führenden Rohrstutzen sind entweder kompliziert aufgebaut oder empfindlich gegen thermische Spannungen.

Es wird daher eine Anordnung mit einer schwimmenden Abdichtung vorgeschlagen, bei der der vom Innengehäuse (6) weg weisende Bereich (28) des Rohrstücks (30) zwischen einem von einem Anschlussflansch (8) des Rohrstutzens (2) in Richtung zum Innengehäuse (6) ragenden Rohrabschnitt (10) des Rohrstutzens (2) und einem zylinderförmigen Abschnitt (24), der sich von einem Zwischenflansch (22) in Richtung zum Innengehäuse (6) erstreckt, angeordnet ist.

Bei einer derartigen Ausführung sind insbesondere axiale Verschiebungen der Gehäuseteile zueinander möglich, ohne dass Undichtigkeiten auftreten.

## Beschreibung

Die Erfindung betrifft eine Anordnung zur fluidischen Verbindung eines Innengehäuses mit einem nach außen führenden Rohrstutzen, mit einem Rohrstutzen, einem Außengehäuse mit einer Aufnahmeöffnung, die von einer Flanschfläche umgeben ist und einem Innengehäuse, welches eine Öffnung aufweist, an deren die Öffnung begrenzenden Wänden ein Rohrstück unlösbar befestigt ist.

Derartige Anordnungen sind in verschiedenen Ausführungen bekannt. Sie werden benötigt, um dem Kanal eines inneren Gehäuses Fluid zuzuführen oder dieses wieder abzuführen, wobei das innere Gehäuse von einem weiteren durchströmten Kanal umgeben ist, der zwischen dem inneren und einem äußeren Gehäuse ausgebildet ist. Hierbei ist auf eine fluiddichte Trennung der beiden durchströmten Kanäle hinzuwirken, um eine Vermischung der beiden Fluide zu verhindern. Insbesondere werden derartige Anordnungen bei der Herstellung von Wärmetauschern genutzt, bei denen eine Trennung beispielsweise eines äußeren Kühlmittelkanals von einem inneren Kanal, der von einem zu kühlenden Medium durchströmt ist, sicherzustellen. Insbesondere wenn dieser vom zu kühlenden Medium durchströmte Kanal von allen Seiten von dem Kühlmittel umströmt sein soll, ist es erforderlich, dass eine dichte Durchführung vom äußeren Rohrstutzen durch den Kühlmittelmantel zum inneren Kanal erreicht wird.

Es sind verschiedene Anwendungen solcher Wärmetauscher bekannt, welche insbesondere im Kraftfahrzeug zur Kühlung von Abgasen, Ladeluft oder Öl verwendet werden. Häufig wird hierbei ein am inneren Gehäuse festgeschweißtes Rohrstück durch eine Öffnung im äußeren Gehäuse geführt. Hierzu ist jedoch eine besondere Teilung des äußeren Gehäuses notwendig. Des Weiteren ist bei einer derartigen Ausführung die Abdichtung des Kühlmittelmantels problematisch.

Probleme treten insbesondere bei thermischer Ausdehnung der das heiße Medium führenden Teile auf. Des Weiteren führen bei der Verwendung in Kraftfahrzeugen erhebliche Schwingungen des Fahrzeugs sowie bei Abgaswärmetauschern die Pulsationen des Abgases gegebenenfalls zu einer Undichtigkeit. Aus diesem Grund wurde versucht, die starre Kopplung im Bereich des Fluidanschlusses zwischen Innengehäuse und Außengehäuse zu vermeiden.

So wird in der DE 103 12 788 A1 ein Anschluss des Abgas führenden Rohrstutzens an das innere Gehäuse vorgeschlagen, bei dem der Anschlussrohrstutzen einen sich axial und radial erstreckenden Flansch aufweist, der mit einer Flanschfläche des Außengehäuses verbunden ist. Am Innengehäuse ist ein Rohrstück befestigt, welches sich in Richtung zum außen liegenden Anschlussrohrstutzen erstreckt. Dieses ist von einem topfförmigen Bauteil umgeben, an dessen Außenwand Dichtungen angeordnet sind, die gegen die axiale Erweiterung des mit dem Rohrstutzen verbundenen Flansches anliegen. Zusätzlich befindet sich zwischen dem Rohrstück und dem Anschlussflansch des Rohrstutzens eine dreiteilige Dichtung, die über eine Schraube am Anschlussflansch befestigt ist und deren anderes Ende zwischen dem Rohrstück und dem topfförmigen Bauteil eingeklemmt ist. Diese Dichtungen beinhalten einen Balg zum Ausgleich unterschiedlicher axialer Ausdehnungen der Gehäuseteile.

Der Aufbau einer derartigen Vorrichtung ist jedoch sehr kompliziert. Zusätzlich muss zur Abdichtung eine spezielle Dichtung hergestellt werden, so dass zusätzliche Kosten auftreten. Auch die Montage dieser Anordnung ist sehr aufwendig. Bei Versagen dieser speziellen Dichtung besteht des Weiteren keine zuverlässige Trennung der Medien mehr.

Es stellt sich daher die Aufgabe, eine Anordnung zur fluidischen Verbindung eines Innengehäuses mit einem nach außen führenden Rohrstutzens zu schaffen, welche einfach aufgebaut und zu montieren ist und somit kostengünstig herzustellen ist. Unterschiedliche Ausdehnungen aufgrund der verschiedenen thermischen Belastungen der Bauteile sollen dabei nicht zu Verspannungen zwischen den Bauteilen im Bereich des Fluideintritts beziehungsweise -austritts führen. Eine Trennung der Medien auch bei Ausfall eines Dichtelementes soll zusätzlich sichergestellt werden.

Diese Aufgabe wird dadurch gelöst, dass der vom Innengehäuse weg weisende Bereich des Rohrstücks zwischen einem von einem Anschlussflansch des Rohrstutzens in Richtung zum Innengehäuse ragenden Rohrabschnitt des Rohrstutzens und einem zylinderförmigen Abschnitt, der sich von einem Zwischenflansch in Richtung zum Innengehäuse erstreckt, angeordnet ist. Durch diese erfindungsgemäße Anordnung wird eine schwimmende Dichtung geschaffen, bei der unterschiedliche thermische Dehnungen der Bauteile ausgeglichen werden können. Durch dieses Ineinanderstecken der einzelnen Bauteile besteht eine Unempfindlichkeit bei dieser Art der Anbindung gegen auftretende Schwingungen.

In einer bevorzugten Ausführung ist der Zwischenflansch zwischen der Flanschfläche des Außengehäuses und dem Anschlussflansch des Rohrstutzens lösbar befestigt. Hierdurch wird die Montage im Vergleich zu bekannten Ausführungen erheblich vereinfacht und zusätzlich können zur Kostensenkung Standardbauteile verwendet werden. Auch ein nachträglicher Ein- und Ausbau beispielsweise zum Wechseln der Dichtungen ist auf einfache Weise möglich.

Vorzugsweise ist zwischen dem vom Innengehäuse weg weisenden Bereich des Rohrstücks und dem in Richtung zum Innengehäuse ragenden Rohrabschnitt des Rohrstutzens sowie zwischen dem vom Innengehäuse weg weisenden Bereich des Rohrstücks und dem zylinderförmigen Abschnitt des Zwischenflansches jeweils zumindest ein Dichtring angeordnet. Diese Dichtringe können beispielsweise als im Handel erhältliche O-Ringe ausgebildet sein. Bei Versagen einer dieser Dichtringe bleibt die fluidische Trennung zwischen den beiden Medien dennoch erhalten.

In einer weiterführenden Ausführung ist am Anschlussflansch eine Öffnung ausgebildet, die gegenüberliegend zum Ende des Rohrstücks angeordnet ist. Bei Ausfall einer der Dichtringe kann bei dieser Ausführung das Fluid aus dem das zu kühlende Fluid führenden Bereich oder aus dem das Kühlfluid führenden Bereich nach außen abgeführt werden, ohne dass eine Vermischung der Fluide befürchtet werden muss, die je nach Verwendung des Wärmetauschers sogar zu einer Explosion des Verbrennungsmotors führen könnte.

Zur Abdichtung des Kanals zwischen dem Innengehäuse und dem Außengehäuse nach außen ist zwischen dem Zwischenflansch und der Flanschfläche des Außengehäuses ein Dichtring angeordnet. Hierdurch wird eine einfache Form der Abdichtung beispielsweise durch einen O-Ring erreicht.
In einer bevorzugten Ausführungsform sind die Dichtringe in am Zwischenflansch und am Rohrstutzen ausgebildeten ringförmigen Nuten angeordnet. Diese Bauteile sind einfach im Vorhinein zu bearbeiten, so dass die Dichtringe vor dem Zusammenbau in die Nuten eingelegt werden können, wodurch sich wiederum die Montage vereinfacht.

Es wird somit eine Anordnung zur fluidischen Verbindung eines Innengehäuses mit einem nach außen führenden Rohrstutzen geschaffen, welche einfach aufgebaut und zu montieren ist, die Fluid durchströmten Kanäle auch bei Ausfall einer Dichtung zuverlässig voneinander trennt und durch die schwimmende Anordnung einen Ausgleich bezüglich unterschiedlicher thermischer Dehnungen der Bauteile sicherstellt.

Ein Ausführungsbeispiel einer erfindungsgemäßen Anordnung zur fluidischen Verbindung eines Innengehäuses mit einem nach außen führenden Rohrstutzen ist in der Figur dargestellt und wird nachfolgend beschrieben.

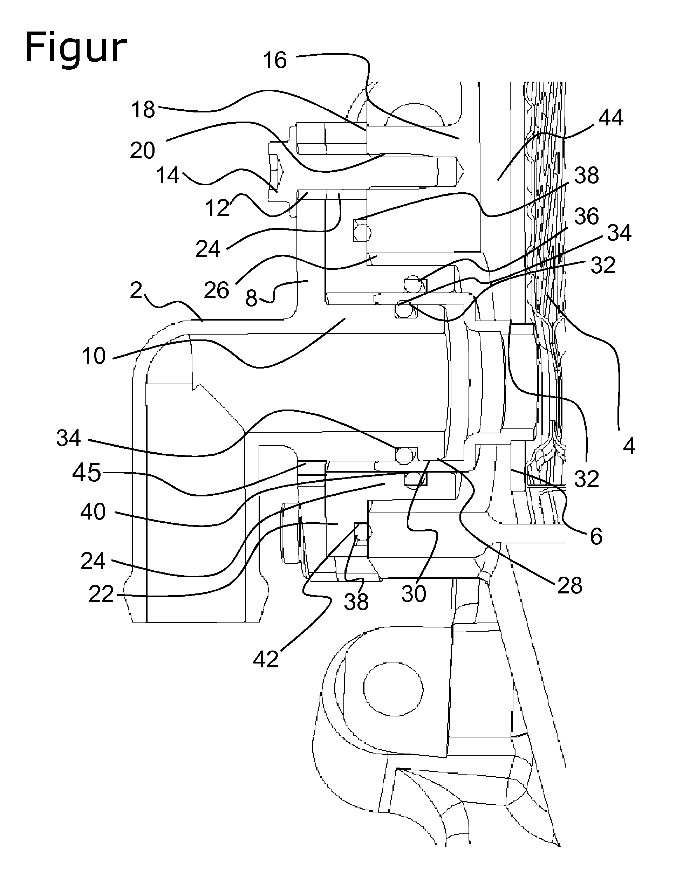

Figur 1 zeigt eine Seitenansicht einer erfindungsgemäßen Anordnung am Beispiel eines Wärmetauschers, der ausschnittsweise dargestellt ist, in geschnittener Darstellung.

Die erfindungsgemäße Anordnung wird im Folgenden beispielhaft an einem Abgaswärmetauscher für ein Kraftfahrzeug beschrieben, der in der Figur dargestellt ist.

Die Anordnung weist einen Rohrstutzen 2 auf, durch den Abgas aus einer Abgasleitung in einen Abgas führenden Kanal 4 eines Innengehäuses 6 eines Abgaswärmetauschers geführt werden soll. Dieser Rohrstutzen 2 weist einen Anschlussflansch 8 sowie einen in Richtung des Innengehäuses 6 ragenden Rohrabschnitt 10 auf.

Der Anschlussflansch 8 des Rohrstutzens 2 weist über seinen Umfang verteilte Durchgangsbohrungen 12 auf, durch die Schrauben 14 gesteckt sind, mittels derer der Rohrstutzen 2 an einem Außengehäuse 16 des Wärmetauschers befestigt ist. Hierzu ist am Außengehäuse 16 eine Flanschfläche 18 ausgebildet, in der zu den Durchgangsbohrungen 12 des Anschlussflansches 8 korrespondierende Gewindebohrungen 20 hergestellt sind, in denen die Schrauben 14 befestigt werden.

Zwischen dem Anschlussflansch 8 und der Flanschfläche 18 des Außengehäuses 16 ist ein Zwischenflansch 22 angeordnet, der wiederum zu den Durchgangsbohrungen 12 und den Gewindebohrungen 20 korrespondierende Bohrungen 24 aufweist, durch die die Schrauben 14 ragen, wodurch der Zwischenflansch 22 lösbar mit dem Anschlussflansch 8 am Außengehäuse 16 befestigt ist.

Der Zwischenflansch 22 weist einen sich von seinem Innenumfang aus in Richtung zum Innengehäuse 6 erstreckenden zylinderförmigen Abschnitt 24 auf, der radial innerhalb einer Aufnahmeöffnung 26 des Außengehäuses 16 angeordnet ist. Radial innerhalb dieses zylinderförmigen Abschnitts 24 befindet sich im zusammengebauten Zustand ein vom Innengehäuse 6 weg weisender Bereich 28 eines Rohrstücks 30, dessen entgegengesetztes axiales Ende an eine Öffnung 32 begrenzenden Seitenwänden des Innengehäuses 6 befestigt ist.

Wiederum radial innerhalb dieses vom Innengehäuse 6 weg weisenden Bereichs 28 des Rohrstücks 30 ist der nach innenragende Rohrabschnitt 10 des Rohrstutzens 2 angeordnet.

Der Rohrstutzen 2 weist an seiner am Rohrstück 30 anliegenden Außenwand eine erste Nut 32 auf, in der ein Dichtring 34 in Form eines O-Ringes angeordnet ist. Auch am Zwischenflansch 22 sind zwei Nuten 36, 38 ausgebildet, wobei die Nut 36 an einer radialen Innenwand des zylinderförmigen Abschnitts 24 gegenüberliegend zum vom Innengehäuse weg weisenden Bereiches 28 des Rohrstücks 30 angeordnet ist und die andere Nut 38 axial an der zum Außengehäuse 16 weisenden Fläche des Zwischenflansches 22 ausgebildet ist. In den Nuten 36, 38 ist wiederum jeweils ein Dichtring 40, 42 angeordnet.

Strömt nun Abgas vom Rohrstutzen 2 in Richtung zum Abgas führenden Kanal 4 im Innengehäuse 6 wird ein Ausströmen des Abgases in Richtung des Kühlmittelkanals an zwei verschiedenen Positionen verhindert. Sowohl der Dichtring 34 zwischen dem Rohrstutzen 2 und dem zylinderförmigen Abschnitt 24 des Zwischenflansches 22 als auch der Dichtring 40 zwischen dem vom Innengehäuse 6 weg weisenden Bereich 28 des Rohrstücks 30 und dem zylinderförmigen Abschnitt 24 des Zwischenflansches 22 verhindern ein Eindringen des Abgases in einen Kühlmittelmantel 44, der zwischen dem Innengehäuse 6 und dem Außengehäuse 16 ausgebildet ist. Der Dichtring 42 verhindert zusätzlich ein Ausströmen des Kühlmittels aus dem Kühlmittelmantel 44 nach außen. Zusätzlich ist gegenüberliegend zum Ende des Rohrstücks 30 am Anschlussflansch 8 eine Öffnung 45 ausgebildet, über die der Außenbereich des Wärmetauschers mit dem Innenbereich bei Ausfall einer der Dichtungen 34, 40 fluidisch verbunden wird. So wird zusätzlich auch bei hohen auftretenden Druckgefällen zwischen dem Kanal 4 und dem Kühlmittelmantel 44 ein Eindringen von Kühlmittel in den Abgas führenden Kanal 4 vermieden. Stattdessen kann das Kühlmittel in einem derartigen Fall nach außen austreten.

Durch die hohe thermische Belastung der lediglich von Abgas durchströmten Teile können Wärmeausdehnungen an diesen Teilen entstehen. Dies kann einen axialen Verzug des Innengehäuses 6 gegenüber dem Außengehäuse 16 zur Folge haben. Entsteht ein solcher Verzug wird das am Innengehäuse 6 befestigte Rohrstück 30 axial im Vergleich zum Rohrstutzen 2 und zum Zwischenflansch 22 verschoben. Dies hat jedoch keine Undichtigkeiten zur Folge, da das Rohrstück 30 verschieblich zwischen dem Rohrstutzen 2 und dem zylinderförmigen Abschnitt 24 des Zwischenflansches 22 angeordnet ist. Da die Dichtringe 34, 40 in radialer Richtung gegen das Rohrstück 30 anliegen bleibt deren Dichtwirkung auch bei einer axialen Verschiebung erhalten. Es wird somit eine schwimmende Dichtung hergestellt.

Des Weiteren wird eine deutliche Erhöhung der Unempfindlichkeit gegen Schwingungen und Vibrationen erreicht, da die Teile leicht zueinander beweglich angeordnet werden können, wodurch ein Aufbrechen von Schweißnähten durch die Vibrationen zuverlässig verhindert wird. Auch kann die Montage der Anordnung nach dem Zusammenbau des Gehäuses des Wärmetauschers erfolgen, da der Zusammenbau der erfindungsgemäßen Anordnung lediglich durch einfaches Einstecken des Zwischenflansches 22 in die Aufnahmeöffnung 26 bei gleichzeitigem Umschließen des Rohrstücks 30, dem Einstecken des Rohrstutzens 2 in das Rohrstück 30 und das anschließende Verschrauben des Zwischenflansches 22 und des Anschlussflansches 8 an der Flanschfläche 18 des Außengehäuses 16 abgeschlossen wird.

Es wird somit ein Wärmetauscher vorgestellt, dessen Anschluss eines inneren Kanals zu einer äußeren Rohrleitung durch ein Außengehäuse leicht zu montieren ist und auch bei Ausfall einer Dichtung eine Vermischung der Wärme austauschenden Medien und eine gegebenenfalls daraus folgende Explosion der Verbrennungskraftmaschine zuverlässig verhindert. Dabei ist die Anbindung schwimmend ausgeführt, so dass auch bei Bewegung des Innengehäuses zum Außengehäuse die dichtende Wirkung vorhanden bleibt.

Es sollte deutlich sein, dass konstruktive Änderungen innerhalb des Schutzumfangs des Hauptanspruchs denkbar sind. Insbesondere ist der Schutzbereich nicht auf das beschriebene Ausführungsbeispiel beschränkt, da die Verwendung der erfindungsgemäßen Anordnung auch für andere Verbindungen von Rohrleitungen und Fluidkanälen durch zwischenliegende Wände denkbar ist. Des Weiteren kann der Rohrstutzen im Vergleich zur Ausdehnung des Wärmetauschers auch mit einem deutlich größeren oder wachsenden Durchmesser ausgeführt werden als in der beschriebenen und dargestellten Ausführung, so dass die Einströmung über die gesamte Höhe und Breite des Wärmetauschers erfolgen kann.

## Patentansprüche

1. Anordnung zur fluidischen Verbindung eines Innengehäuses mit einem nach außen führenden Rohrstutzen, mit
einem Rohrstutzen,
einem Außengehäuse mit einer Aufnahmeöffnung, die von einer Flanschfläche umgeben ist
und einem Innengehäuse, welches eine Öffnung aufweist, an deren die Öffnung begrenzenden Wänden ein Rohrstück unlösbar befestigt ist,
**dadurch gekennzeichnet, dass**
der vom Innengehäuse (6) weg weisende Bereich (28) des Rohrstücks (30) zwischen einem von einem Anschlussflansch (8) des Rohrstutzens (2) in Richtung zum Innengehäuse (6) ragenden Rohrabschnitt (10) des Rohrstutzens (2) und einem zylinderförmigen Abschnitt (24), der sich von einem Zwischenflansch (22) in Richtung zum Innengehäuse (6) erstreckt, angeordnet ist.

2. Anordnung zur fluidischen Verbindung eines Innengehäuses mit einem nach außen führenden Rohrstutzen nach Anspruch 1,
**dadurch gekennzeichnet, dass** der Zwischenflansch (22) zwischen der Flanschfläche (18) des Außengehäuses (16) und dem Anschlussflansch (8) des Rohrstutzens (2) lösbar befestigt ist.

3. Anordnung zur fluidischen Verbindung eines Innengehäuses mit einem nach außen führenden Rohrstutzen nach Anspruch 1 oder 2,
**dadurch gekennzeichnet, dass**
zwischen dem vom Innengehäuse (6) weg weisenden Bereich (28) des Rohrstücks (30) und dem in Richtung zum Innengehäuse (6) ragenden Rohrabschnitt (10) des Rohrstutzens (2) sowie zwischen dem vom Innengehäuse (6) weg weisenden Bereich des Rohrstücks (30) und dem zylinderförmigen Abschnitt (24) des Zwischenflansches (22) jeweils zumindest ein Dichtring (34, 40) angeordnet ist.

4. Anordnung zur fluidischen Verbindung eines Innengehäuses mit einem nach außen führenden Rohrstutzen nach einem der vorhergehenden Ansprüche,
**dadurch gekennzeichnet, dass**
am Anschlussflansch (8) eine Öffnung (45) ausgebildet ist, die gegenüberliegend zum Ende des Rohrstücks (30) angeordnet ist.

5. Anordnung zur fluidischen Verbindung eines Innengehäuses mit einem nach außen führenden Rohrstutzen nach einem der vorhergehenden Ansprüche,
**dadurch gekennzeichnet, dass**
zwischen dem Zwischenflansch (22) und der Flanschfläche (18) des Außengehäuses (16) ein Dichtring (42) angeordnet ist.

6. Anordnung zur fluidischen Verbindung eines Innengehäuses mit einem nach außen führenden Rohrstutzen nach einem der Ansprüche 3 oder 4,
**dadurch gekennzeichnet, dass**
die Dichtringe (34, 40, 42) in am Zwischenflansch (22) und am Rohrstutzen (2) ausgebildeten ringförmigen Nuten (32, 36, 38) angeordnet sind.
